# EUROPEAN PATENT APPLICATION

(11) **EP 2 477 129 A1**
(43) Date of publication of application: **18.07.2012**
(21) Application number: 11290016.2
(22) Date of filing: 14.01.2011
(51) Int. Cl.: G06F 17/30

(54) **Method and apparatus of managing media metadata**

(71) Applicant: Alcatel Lucent, 75007 Paris (FR)
(72) Inventor: Lou, Zhe, Antwerpen 2000 (BE); Moons, Jan, Antwerpen 2220 (BE)
(74) Representative: Cockayne, Gillian

(57) **Abstract**

A method of managing media metadata associated with a stored version of a media item, includes, when the media item is used in a product having associated product metadata, automatically updating media metadata associated with the stored version of the media item using the product metadata.

## Description

### FIELD OF THE INVENTION

The present invention relates to a method and apparatus of managing media metadata.

### BACKGROUND

Metadata is data that provides information about other data. For example, a digital image stored in a cache may have associated metadata such as a title, media creation date, version number, author, network address where it is stored, and the like. Metadata may be user-defined, where it is particularly useful for providing contextual information about the data with which it is associated, For example, a person may attach metadata to a media item such as a digital image or a video clip to allow it to be sorted by the date when it was created or by the subject matter of the image or video clip. When a user uploads a picture to an image sharing website, such as Flickr, typically he or she is prompted to provide extra metadata. The user-supplied metadata may subsequently be helpful to the user or others in selecting certain media items from those that are available, for organizing group of items or for other tasks, for example.

### BRIEF SUMMARY

According to a first aspect of the invention, a method of managing media metadata associated with a stored version of a media item, includes, when the media item is used in a product having associated product metadata, automatically updating media metadata associated with the stored version of the media item using the product metadata.

Previously, media metadata associated with a media item was manually updated by a user. For example, a user may manually add descriptive tags, a title or some other form of metadata to a video, document, picture or other media item, that is held in a media store. However, the user may be reluctant to perform this task, particularly if there are a large number of media items involved, the user interface is not conducive to easily adding the media metadata or because of time constraints, for example. It is even more unlikely to expect people to update the media metadata regularly when it would be desirable to do so.

By using an embodiment of the invention, metadata relevant to a media item due it being used in a product may be automatically updated. This may permit extra information to be attached to the media item with no user intervention required or additional user effort. It also permits the product and the media item to become associated, which may be helpful, for example, when a person is searching for related items.

Thus, an embodiment in accordance with the invention may be used to automatically provide the metadata of the stored version of a media item when the media item gets used by another product, which may be another media type, for example.

The media item may be any type of media object, such as, for example, a digital image, a video file, an audio file, a document, a presentation, a multimedia item, et cetera, this not being intended to be an exhaustive list.

Metadata may be any type of information associated with the media item or the product. For example, metadata may include: what tool was used in creating the media item, the purpose of the media item, time and/or date of creation, size of the media item, the creator and/or author of the media item, a network address associated with the media item, or other types of information. Again, this is not intended to be an exhaustive list.

The product metadata may be supplied by a user or could be at least partially automatically generated.

In one embodiment, the media item is stored in a media store that is accessible to a plurality of users via a media sharing website.

According to a second aspect of the invention, apparatus for managing media metadata associated with a stored version of a media item comprises: a metadata manager for receiving product metadata when the media item is used in a product having associated product metadata and for automatically updating media metadata associated with the stored version of the media item using product metadata.

In one embodiment, apparatus in accordance with the second aspect of the invention is included in a production arrangement where the product is created. It could be a plug-in module, for example, included in a production arrangement, or it could be an integral part of such a production arrangement.

In one embodiment, apparatus in accordance with the second aspect of the invention is separate from the production arrangement where the product is created. The apparatus may form part of an updating system, and, for example, be connected to a plurality of production arrangements and/or a plurality of media stores.

In one embodiment, apparatus includes a user interface for a user to associate product metadata with the product

In one embodiment, apparatus includes a media store for storing the stored version of the media item and the media store is accessible to a plurality of users via a media sharing website.

According to a third aspect of the invention, a device is programmed or configured to perform a method in accordance with the first aspect of the invention.

According to a fourth aspect of the invention, a data storage medium stores a machine-executable program for performing a method in accordance with the first aspect of the invention.

### BRIEF DESCRIPTION OF THE DRAWINGS

Some embodiments of the present invention will now be described by way of example only, and with reference to the accompanying drawings, in which:

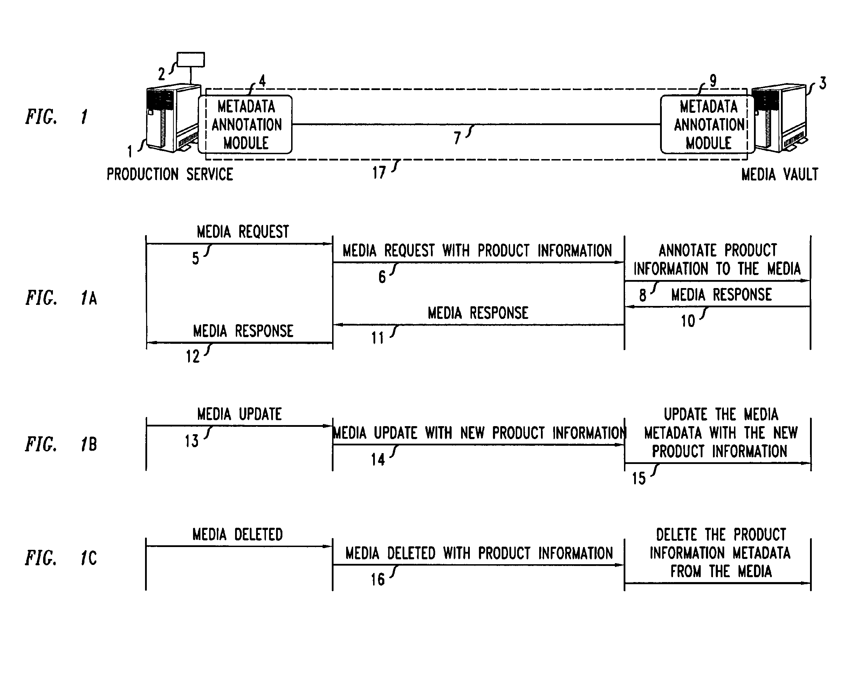

Figure 1 schematically illustrates apparatus in accordance with the invention, with Figure 1a, 1b and 1c being explanatory diagrams relating to the operation of the apparatus of Figure 1.

### DETAILED DESCRIPTION

With reference to Figure 1, a production unit 1 for creating a product, such as a presentation incorporating several different types of media, includes a user interface 2 via which the author of the product may control the creation process. In this example, the author is preparing a presentation entitled "Global Warming".

The author uses "Google docs" as a toolset to edit slides and the presentation has a Google docs URL in the following form:
http;//docs.google.com/present/edit?id=d7t5qsj 1c5n4ptfx.

This URL is part of the product metadata associated with the presentation and is automatically generated and associated with the presentation. Other product metadata is added by the author via the user interface 2, for example, the title of the presentation and the author's name.

The author decides to add a picture with the title "lights out Feb 1^{st} for global warming" to the third slide. The picture is stored at an image sharing website "Flickr", shown schematically as a media store 3, and has a URL of the following form:
http://www.flickr.com/photos/jsmith/376094910/.

The URL of the picture is media metadata associated with the stored version of the picture.

With reference to Fig. 1a, using the user interface 2, the author instructs that the picture be retrieved from the media store 3. The Google docs application acts on the instruction and prepares a media request 5 which is to be sent to the Flickr website. Before the media request 5 is sent by the Google docs application, a plug-in first metadata annotation module 4 attaches product metadata, such as, for example, the title of the presentation, the author's name, the URL of the presentation, the number of slides, and so on, to the media request 5. The media request with the attached product metadata 6 are then sent over an Internet connection 7 to the Flickr media store 3.

In one embodiment, the first metadata annotation module 4 adds all available product metadata to the request 5. In another embodiment, only certain types of product metadata are included with the request 5. For example, the number of slides and the type of tool used to create the presentation may be omitted.

The Flickr media store 3 receives the media request and product metadata 6. At 8, a second metadata annotation module 9 included at the Flickr media store 3 adds the product metadata to the media metadata associated with the requested picture. The stored version of the picture in the media store 3 now has associated media metadata that includes both its previous media metadata and the product metadata that was included with the request. The requested picture is sent to the Google docs application at the production unit 1 with the newly augmented media metadata at 10, 11 and 12. Thus, the version of the picture "lights out Feb 1^{st} for global warming" held in the media store 3 is automatically annotated with extra relevant information when it gets used by a product software and/or application and/or service, in this case, the Google docs application..

With reference to Fig. 1b, in one embodiment, when the product or the requested media is updated at the production unit 1, for example, the presentation title is changed or the location of the media changes, the first metadata annotation module 4 sends a media update at 13 and 14 with updated product metadata to the media store 3, where the metadata of the stored version of the media 3 is updated by the second metadata annotation module 9 at 15 with the changed product metadata. This permits updates of the media metadata associated with stored media at 3 to reflect how the media item is currently being used at the production unit 1. However, in another embodiment, only the initial update as set out with reference to Fig. la is used and later changes are not accounted for. This allows for some updating while reducing the messaging required. This approach may be useful, for example, where communication occurs over a link with limited data capability, such as might be found with a mobile user terminal in some circumstances, say.

With reference to Fig. lc, in one embodiment, when the picture or other media item is deleted at the production unit 1, a massage including an indication that the media has been deleted from the product and the product metadata is sent at 16 to the media store 3. The metadata annotation module 9 deletes the product metadata from the media metadata of the stored version of the media item to provide updated media metadata. In other embodiments, no communication is sent to inform the media store that the media item has been deleted.

Although in Figure 1, the first and second metadata annotation modules 4 and 9 are shown as being part of a production unit and a media store respectively, in other embodiments, one or both of them may be separately provided. In one embodiment, the functions of the first and second metadata annotation modules are combined in a common unit as indicated by the broken line 17. This may be included at either the production unit, the media store or separate from both of them, with appropriate messaging between the entities being included to implement the required functions.

In one embodiment, metadata annotation could be part of the requesting product service and in another embodiment, metadata annotation could be managed as an independent web service.

In one embodiment, a metadata annotation web service is arranged to manage metadata associated with products from a plurality of sources and/or media items stored in a plurality of media stores.

The functions of the various elements shown in the figure, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of managing media metadata associated with a stored version of a media item, including:
when the media item is used in a product having associated product metadata, automatically updating media metadata associated with the stored version of the media item using the product metadata.

2. The method as claimed in claim 1 wherein the product metadata is supplied by a user.

3. The method as claimed in claim 1 or 2 and including:
receiving a request for the media item to be sent from a media store for use in the product;
sending the requested media item;
receiving the product metadata; and
adding the received product metadata to the media metadata associated with the stored media item.

4. The method as claimed in claim 1,2 or 3 and, when the media item is deleted from the product, deleting product metadata from the media metadata associated with the stored version of the media item.

5. The method as claimed in any preceding claim and, when at least one of the product metadata and media metadata associated with the media item used in the product, is updated, sending a media metadata update for updating the media metadata associated with the stored version of the media item.

6. The method as claimed in any preceding claim wherein the media item is stored in a media store that is accessible to a plurality of users via a media sharing websitc.

7. The method as claimed in any preceding claim and including sending a request for the media item to be sent from a media store;
receiving the requested media item;
using the received media item in the product; and
sending the product metadata for updating the metadata associated with the stored version of the media item.

8. Apparatus for managing media metadata associated with a stored version of a media item comprising: a metadata manager for receiving product metadata when the media item is used in a product having associated product metadata and for automatically updating media metadata associated with the stored version of the media item using product metadata.

9. The apparatus as claimed in claim 8 and wherein the apparatus is included in a production system.

10. The apparatus as claimed in claim 8 or 9 and including a user interface for a user to associate product metadata with the product.

11. The apparatus as claimed in claim 8, 9 or 10 and including a media store for storing the stored version of the media item and the media store being accessible to a plurality of users via a media sharing website.

12. The apparatus as claimed in claim 8,9,10 or 11 and wherein the apparatus is separate from a production arrangement where the product is created.

13. The apparatus as claimed in claim 8, 9,10 or 11 and wherein the apparatus is connected to a plurality of production arrangements and/or a plurality of media stores.

14. A device programmed or configured to perform a method as claimed in any of claims 1 to 7.

15. A data storage medium storing a machine-executable program for performing a method as claimed in any of claims 1 to 7.
